# EUROPEAN PATENT APPLICATION

(11) **EP 4 603 260 A1**
(43) Date of publication of application: **20.08.2025**
(21) Application number: 25158120.3
(22) Date of filing: 14.02.2025
(51) Int. Cl.: B29C 65/02, B29C 65/18, B29C 65/00, B29C 73/04, B29L 31/30

(54) **METHODS OF JOINING THERMOPLASTIC COMPOSITE COMPONENTS**

(30) Priority: 14.02.2024 US 202418441428
(71) Applicant: Rohr, Inc., Chula Vista, CA 91910-2098 (US)
(72) Inventor: KROEGER, Daniel, San Diego, 92120 (US); CHODAKOWSKI, Pawel, San Diego, 92122 (US); MINER, Jasen A., San Diego, 92111 (US)
(74) Representative: Dehns

(57) **Abstract**

A method for joining thermoplastic composite components (20A, 20B) is provided that includes: providing a first thermoplastic composite (FTC) component (20A) having an FTC first zone and an FTC second zone; providing a second thermoplastic composite (STC) component (20B) having an STC first zone and an FTC second zone; forming a joint region (26) between the FTC and STC components (20A, 20B) by disposing them in a stepped arrangement, wherein each material ply (22) within the FTC first zone overlaps a material ply (22) within the STC first zone by a first overlap distance (X), and at least one material ply (22) within the FTC second zone overlaps a material ply (22) within the STC second zone by a second overlap distance (X), and at least one material ply (22) within the FTC second zone overlaps a material ply (22) within the STC second zone by the first overlap distance (X); and joining the FTC and STC components (20A, 20B) by applying an elevated temperature and pressure.

## Description

### Technical Field

This disclosure relates generally to methods for joining and repairing thermoplastic composite components.

### Background Information

Components made from thermoplastic composite materials are increasingly in demand in the aircraft and other industries as a result of the wide-ranging advantages of the materials. Thermoplastic composite materials can be used to form lightweight and high-strength structures having complex shapes. In addition, thermoplastic composites, as compared to thermosets, offer practically infinite shelf life, faster cycle time, the ability to be recycled/ reformed, improved damage tolerance properties, as well as moisture and chemical resistance.

However, widespread adoption of thermoplastic composites in some industries, such as the aircraft industry, has been limited as a result of challenges with thermoplastic components manufacturing and repair. Current methods of joining thermoplastic components are similar to joining methods employed on thermoset designs; e.g., using mechanical fasteners such as bolts and nuts, rivets, and the like, thereby forming joints between the two or more components which may exhibit reduced structural strength. Accordingly, improved methods for manufacturing and repairing thermoplastic components which meet industry, safety, airworthiness, and fast throughput requirements are desirable to support industry's increased production rates.

### SUMMARY

According to an aspect of the present invention, a method for joining thermoplastic composite components is provided that includes: providing a first thermoplastic composite (FTC) component having an FTC first zone that includes N number of material plies and an FTC second zone that includes M number of material plies, where N and M are integers and N is greater than M; providing a second thermoplastic composite (STC) component having an STC first zone that includes N number of material plies and an FTC second zone that includes M number of material plies; forming a joint region between the FTC component and the STC component by disposing the FTC and STC components in a stepped arrangement, wherein each material ply within the FTC first zone overlaps a respective material ply within the STC first zone by a first overlap distance, and at least one of the material plies within the FTC second zone overlaps a respective material ply within the STC second zone by a second overlap distance, greater than the first overlap distance, and at least one of the material plies within the FTC second zone overlaps a respective material ply within the STC second zone by the first overlap distance; and joining the FTC and STC components by applying an elevated temperature and an elevated pressure to the FTC and STC components within the joint region. The elevated temperature and elevated pressure joining process may include elevating the components to a temperature and pressure at, or close to, a melting point of thermoplastic material of the FTC and/or STC component.

In embodiments, a continuous material ply arrangement may be formed within the joint region of the FTC second zone and the STC second zone by the at least one material ply within the FTC second zone overlapping the respective material ply within the STC second zone by the second overlap distance.

In any of the embodiments described above, the FTC component may further include an FTC third zone that includes P number of material plies and the second thermoplastic composite may further include an STC third zone that includes P number of material plies, wherein P is an integer and does not equal N or M.

In any of the embodiments described above, N may be greater than P, and P may be greater than M.

In any of the embodiments described above, the FTC second zone may be disposed between the FTC first zone and the FTC third zone, and the STC second zone may be disposed between the STC first zone and the STC third zone, and in the joining step the FTC first zone may be joined with the STC first zone, the FTC second zone may be joined with the STC second zone, and the FTC third zone may be joined with the STC third zone.

In any of the embodiments described above, the stepped arrangement may include at least one of the material plies within the FTC third zone overlapping a respective material ply within the STC third zone by a third overlap distance, greater than the first overlap distance, and at least one of the material plies within the FTC third zone may overlap a respective material ply within the STC third zone by the first overlap distance.

In any of the embodiments described above, the second overlap distance may not equal to the third overlap distance.

In any of the embodiments described above, the second overlap distance may equal the third overlap distance.

In any of the embodiments described above, a continuous material ply arrangement may be formed within the joint region of the FTC second zone and the STC second zone by the at least one material ply within the FTC second zone overlapping the respective material ply within the STC second zone by the second overlap distance.

In any of the embodiments described above, a continuous material ply arrangement may be formed within the joint region of the FTC third zone and the STC third zone by the at least one material ply within the FTC third zone overlapping the respective material ply within the STC third zone by the third overlap distance.

According to an aspect of the present invention, a method for joining thermoplastic composite components is provided that includes: providing a first thermoplastic composite (FTC) component having an FTC first zone, an FTC second zone, and an FTC third zone, wherein the FTC second zone is disposed between the first FTC zone and the second FTC zone; providing a second thermoplastic composite (STC) component having a STC first zone, a STC second zone, and a STC third zone, wherein the STC second zone is disposed between the first STC zone and the second STC zone; wherein the FTC first zone and the STC first zone each include a first number of material plies, the FTC second zone and the STC second zone each include a second number of material plies, and the FTC third zone and the STC third zone each include a third number of material plies; and wherein the first number of material plies is greater than the second number of material plies and the third number of material plies, and the third number of material plies is greater than the second number of material plies; forming a joint region between the FTC and STC components by disposing the FTC and STC components in a stepped arrangement, wherein each material ply within the FTC first zone overlaps a respective material ply within the STC first zone by a first overlap distance, and at least one of the material plies within the FTC second zone overlaps a respective material ply within the STC second zone by a second overlap distance, greater than the first overlap distance; and joining the FTC and STC components by applying an elevated temperature and an elevated pressure to the FTC and STC components within the joint region. The elevated temperature and elevated pressure joining process may include elevating the components to a temperature and pressure at, or close to, a melting point of thermoplastic material of the FTC and/or STC component.

In embodiments, at least one of the material plies within the FTC second zone may overlap a respective material ply within the STC second zone by the first overlap distance.

In any of the embodiments described above, at least one of the material plies within the FTC third zone may overlap a respective material ply within the STC third zone by a third overlap distance, and the third overlap distance is greater than the first overlap distance.

In any of the embodiments described above, at least one of the material plies within the FTC third zone may overlap a respective material ply within the STC third zone by the first overlap distance.

According to an aspect of the present invention, a method for joining thermoplastic composite components is provided that includes: providing a first thermoplastic composite (FTC) component having an FTC first zone, an FTC second zone, and an FTC third zone, wherein the FTC second zone is disposed between the first FTC zone and the second FTC zone; providing a second thermoplastic composite (STC) component having a STC first zone, a STC second zone, and a STC third zone, wherein the STC second zone is disposed between the first STC zone and the second STC zone; wherein the FTC first zone and the STC first zone include a first number of material plies, the FTC second zone and the STC second zone include a second number of material plies, and the FTC third zone and the STC third zone include a third number of material plies; wherein the first number of material plies is greater than the second number of material plies and the third number of material plies, and the third number of material plies is greater than the second number of material plies; forming a joint region between the FTC and STC components by disposing the FTC and STC components in a stepped arrangement, the forming including disposing a first material ply segment within the joint region between the FTC third zone and the STC third zone; and joining the FTC and STC components by applying an elevated temperature and an elevated pressure to the FTC and STC components within the joint region. The elevated temperature and elevated pressure joining process may include elevating the components to a temperature and pressure at, or close to, a melting point of thermoplastic material of the FTC and/or STC component.

In embodiments, a continuous material ply arrangement may be formed within the joint region by the first material ply segment.

In any of the embodiments described above, the forming may include disposing a second material ply segment within the joint region between the FTC second zone and the STC second zone.

In any of the embodiments described above, a continuous material ply arrangement may be formed within the joint region by the second material ply segment.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a diagrammatic view of a thermoplastic composite structure embodiment having multiple thickness zones in stepped configuration.
FIG. 2 is a diagrammatic illustration of a thermoplastic composite structure disposed within a press system.
FIG. 3 is a diagrammatic planar view of a thermoplastic composite structure embodiment.
FIG. 3A is a diagrammatic side view of the thermoplastic composite structure embodiment shown in FIG. 3.
FIG. 4 is diagrammatic representation of a pair of thermoplastic composite components disposed in a stepped arrangement prior to any press consolidation of adjacent plies.
FIG. 5 is diagrammatic representation of the thermoplastic composite components disposed in a stepped arrangement shown in FIG. 4, now disposed in a press system.
FIG. 6 is diagrammatic representation of the thermoplastic composite components shown in FIGS. 4 and 5, disposed in a press system, now joined together.
FIG. 7 is a diagrammatic representation of a first thermoplastic composite component and a second thermoplastic composite component shown in a stepped arrangement and separated from one another.
FIG. 8 is diagrammatic representation of a pair of thermoplastic composite components disposed in a stepped arrangement.
FIG. 9 is diagrammatic representation of a pair of thermoplastic composite components disposed in a stepped arrangement.

### DETAILED DESCRIPTION

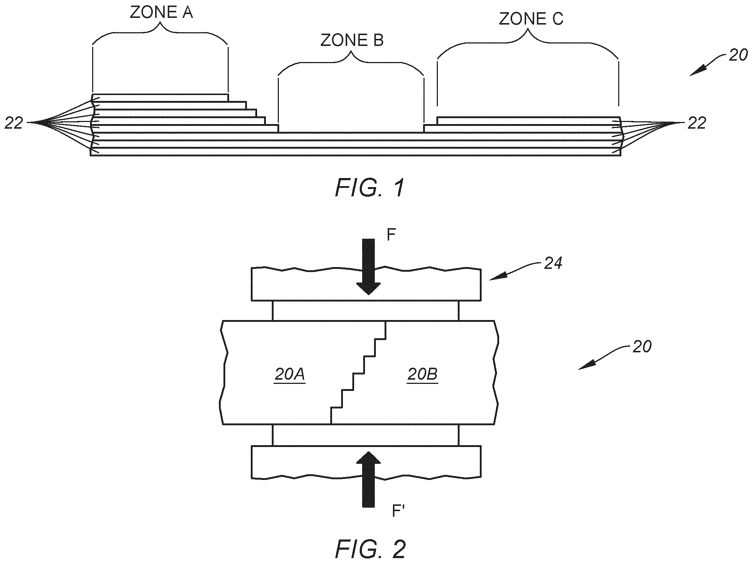

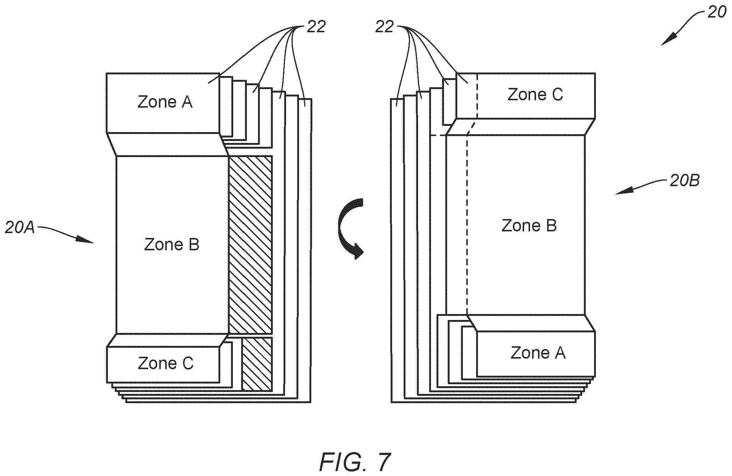

Aspects of the present disclosure include a method for joining two or more components 20A, 20B of a thermoplastic composite structure 20 in order to form a continuous thermoplastic composite structure. The components comprise thermoplastic material disposed in material plies. As will be detailed herein, the present disclosure is particularly well suited to stamp forming thermoplastic composite structures that include a plurality of zones, each having a different number of material plies. FIG. 1 diagrammatically illustrates a thermoplastic composite structure 20 that includes three different zones, each having a different number of plies; e.g., Zone A has "X" number of material plies 22 (e.g., eight plies), Zone B has "Y" number of material plies 22 (e.g., three plies), and Zone C has "Z" number of material plies 22 (e.g., shown as five plies in FIG. 1 and six plies in FIG. 7), wherein "X", "Y", and "Z" are integers that do not equal one another. The structure 20 may include a single type of thermoplastic material or more than one type of thermoplastic material. The structure 20 may include reinforcement material within a ply 22; e.g., reinforcement fibers, a scrim, a mesh, woven fibers, etc. In those embodiments that include reinforcement fibers, the fibers may be continuous or discontinuous, and the fibers may be directionally arranged or randomly disposed, or the like. In some embodiments, different plies 22 may include different types of reinforcement materials; e.g., a first ply 22 having a first type of reinforcement material, a second ply 22 having a second type of reinforcement material that is different from the first type of reinforcement material, and so on. In some embodiments, the orientation of the reinforcement material may vary in different plies 22; e.g., a first ply 22 having a reinforcement material disposed in a first orientation, a second ply 22 having a reinforcement material disposed in a second orientation, wherein the second orientation is non-parallel to the first orientation. The present disclosure is not limited to any particular thermoplastic material or any particular type of reinforcement material (when included).

The elevated temperature and pressure joining process includes, as the term implies, subjecting the components 20A, 20B to an elevated temperature and pressure for a period of time that is adequate for the thermoplastic material plies 22 to join together; e.g., fuse to one another. The elevated temperature and pressure joining process may include elevating the components 20A, 20B to a temperature and pressure at, or close to, the melting point of the thermoplastic material to permit joining. A press system 24 (e.g., as diagrammatically illustrated in FIG. 2) may be utilized to apply the elevated heat and pressure (symbolized by opposing forces F, F') to the region of the components 20A, 20B to be joined. The press system 24 may include press platens tailored to the geometry of the region of the components 20A, 20B to be joined. In some instances, the platens may be in direct contact with the components 20A, 20B to be joined, and in other embodiments an intermediary substrate (e.g., a release layer - not shown) may be disposed between the platens and the respective component surfaces. The present disclosure is not limited to any particular methodology of subjecting the components 20A, 20B to be joined to an elevated pressure and temperature for joining purposes.

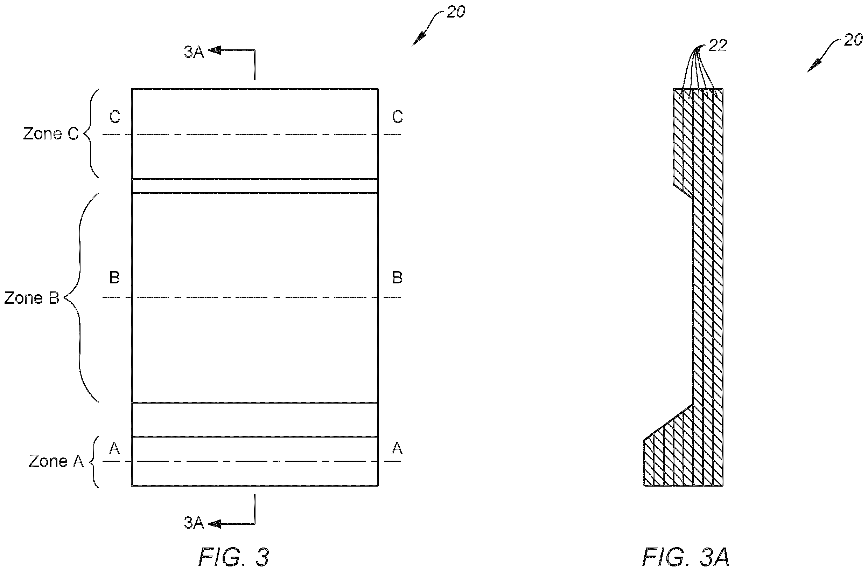

As stated above, the present disclosure is particularly well suited to joining thermoplastic composite components 20A, 20B having a plurality of zones, each zone having a number of different material plies 22. FIGS. 3 and 3A illustrate a thermoplastic composite structure 20 having a Zone A with eight (8) material plies, a Zone B with three (3) material plies, and a Zone C with five (5) material plies. The geometry of the thermoplastic composite structure 20 shown in FIGS. 3 and 3A is provided to illustrate aspects of the present disclosure and is not intended to be limiting in any manner. The present disclosure may be used to form a wide variety of different thermoplastic composite structures 20 that may be used in a variety of different applications. Modern commercial aircraft often use substantially large thermoplastic composite components that can be a challenge to form; e.g., exterior skin panels, nacelle panels, interior panels, and the like. The present disclosure provides particular utility when used to form large geometry thermoplastic composite panels, parts, or structures.

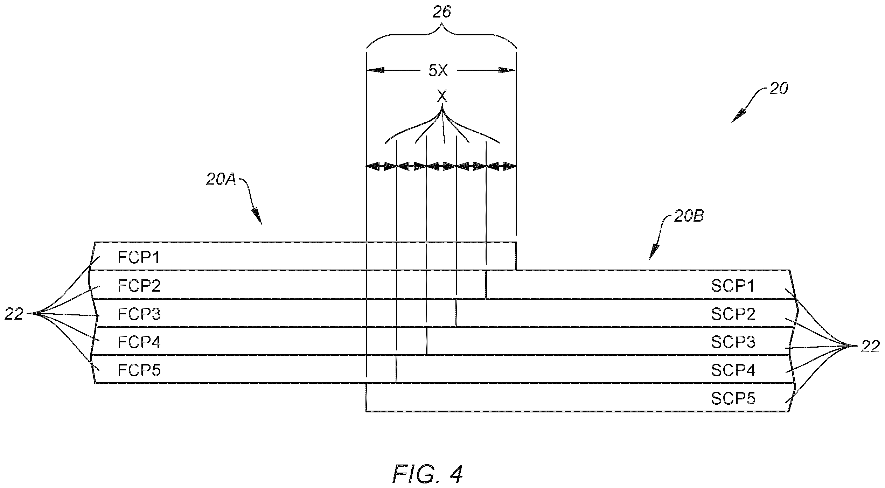

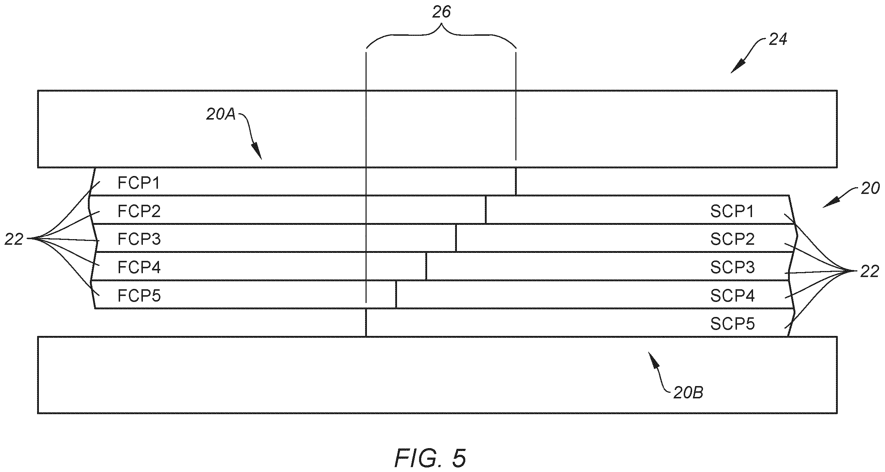

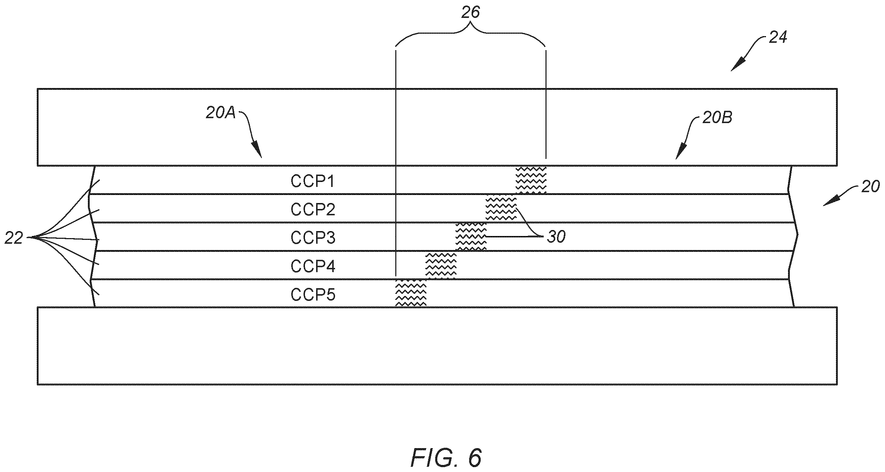

FIGS. 4-6 are provided to illustrate a joining process in which the material plies 22 of a first component 20A and a second component 20B are joined. The ends of the component material plies 22 are disposed in a stepped arrangement within the joint region 26. In FIG. 4, adjacent material plies 22 are stepped (i.e., overlapped) a distance "X". Adjacent material plies 22, therefore, have a contact length (i.e., overlap length) equal to the distance "X". In this diagrammatic example, there are five (5) material plies 22 in each component. The collective length of the joint region 26 in this example is 5X. FIGS. 5 and 6 diagrammatically illustrate the joining process of the first and second components 20A, 20B shown in FIG. 4. In FIG. 5, the stepped portions of the first and second components 20A, 20B are engaged with one another; e.g., the first component first ply ("FCP1") is in stepped engagement with the second component first ply ("SCP1"), and the first component second ply ("FCP2") is in stepped engagement with the second component second ply ("SCP2"), and so on. After the joining process, the respective material plies 22 within the first and second components 20A, 20B have joined; e.g., the overlapping portions of the first component first ply ("FCP1") and the second component first ply ("SCP1") have joined together (e.g., become fused - shown diagrammatically as joined sections 30) to form the first component combined ply ("CCP1"), and the overlapping portions of the first component second ply ("FCP2") and the second component second ply ("SCP2") have joined (e.g., become fused) to form the second component combined ply ("CCP2"), and so on.

The present disclosure provides a methodology for combining thermoplastic composite components 20A, 20B that have a plurality of zones, with each zone having different numbers of material plies 22. As shown in FIG. 3, some thermoplastic composite structures 20 include joining components 20A, 20B having a plurality of zones, each zone having a number of different material plies 22. FIGS. 3 and 3A illustrate a polymeric structure having a Zone A with eight (8) material plies 22, a Zone B with three (3) material plies 22, and a Zone C with five (5) material plies 22. FIG. 7 diagrammatically illustrates a structure 20 geometry like that shown in FIG. 3 is a separated view (e.g., along a line like sectional line 3A shown in FIG. 3) with material plies 22 shown in a stepped configuration to represent a joint region 26. The right side component 20B shown in FIG. 7 is shown in an inverted view (i.e., from the backside) to facilitate viewing of the material plies 22.

As described above, when a joining a pair of thermoplastic composite components 20A, 20B using a stepped joint (subsequently compressed under elevated pressure and temperature), the respective material plies 22 typically overlap a distance. To facilitate the description, it can be assumed that each step would normally have a step (i.e., overlap) length of "X" distance. In Zone A where there are eight (8) material plies 22, the joint region extends a total length of the sum of the step lengths (i.e., eight "X" lengths -"8X", assuming all of the steps are the same length). In Zone B where there are three (3) material plies 22, the joint region extends three "X" lengths ("3X"), and in Zone C where there are five (5) material plies 22, the joint region 26 extends five "X" lengths ("5X"), again assuming all of the step lengths are uniform which is not required. Hence, the joint region length in the different Zones may differ as a function of the number of material plies 22.

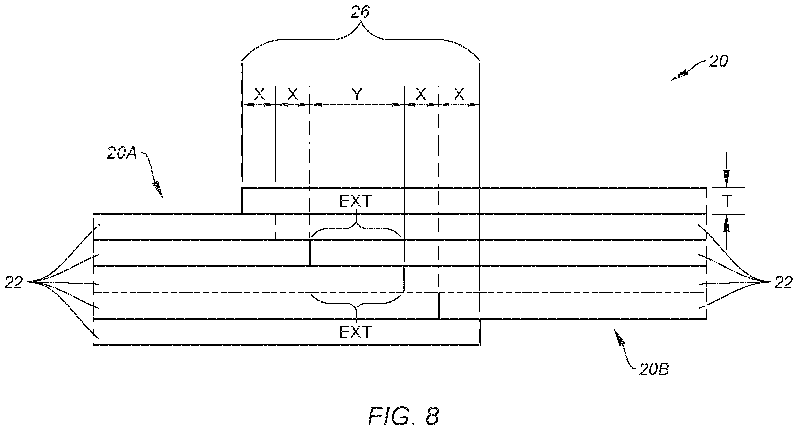

To ensure continuous material plies throughout the joint region 26 within each of the Zones A-C, the present disclosure may include material plies 22 with additional overlap material in the joint region 26 that align with one another to accommodate the differences in joint region length between the Zones as a result of the different numbers of material plies 22. To produce the desired stepped ply configuration, embodiments of the present disclosure may include one or more material plies 22 having an extended length in the joint region (i.e., extended step lengths) to ensure continuous coverage within each of the material plies 22. FIG. 7 diagrammatically illustrates extended material ply 22 lengths in both the thermoplastic components 20A, 20B to be joined. As stated above, the right side component shown in FIG. 7 is shown in an inverted view (i.e., from the backside) to facilitate viewing of the material plies. On the left side component 20A, the extended material ply 22 length is shown with cross-hatching to distinguish it from the other material plies 22 (the cross-hatching is not intended to show a sectional surface). On the right side component 20B, the dashed line identifies the extended material ply 22 length disposed in Zones B and C. The side view of FIG. 8 illustrates the extended material ply 22 lengths ("EXT") in communication with one another within the layup of the components 20A, 20B to be joined. As can be seen diagrammatically in FIG. 8, several material ply 22 interfaces have a step length (i.e., overlap) distance "X", and the interface between two extended length material plies has a step length distance "Y", where "Y" is greater than "X".

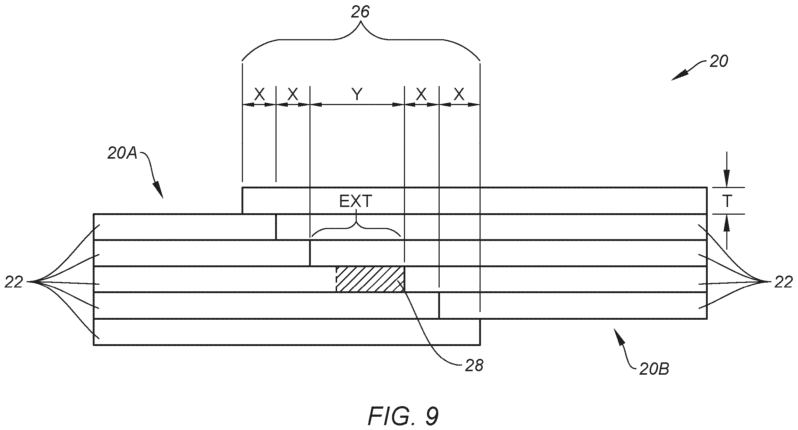

Referring to FIG. 9, in some present disclosure embodiments, as an alternative to an extended material ply 22, a material ply segment 28 may be inserted within the joint region 26 in place of where the extended portion of the material ply would otherwise reside.

In thermoplastic composite structures 20 having Zones with material plies 22 having different thicknesses ("T" - see FIG. 8), additional overlap material may be added in the joint region 26 to accommodate the different ply 22 thicknesses and produce a smooth transition between Zones.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details. It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

## Claims

1. A method for joining thermoplastic composite components (20A, 20B), comprising:
providing a first thermoplastic composite (FTC) component (20A) having an FTC first zone that includes N number of material plies (22) and an FTC second zone that includes M number of material plies (22), where N and M are integers and N is greater than M;
providing a second thermoplastic composite (STC) component (20B) having an STC first zone that includes N number of material plies and an FTC second zone that includes M number of material plies (22);
forming a joint region (26) between the FTC component (20A) and the STC component (20B) by disposing the FTC component (20A) and the STC component (20B) in a stepped arrangement, wherein each material ply (22) within the FTC first zone overlaps a respective material ply (22) within the STC first zone by a first overlap distance (X), and at least one of the material plies (22) within the FTC second zone overlaps a respective material ply (22) within the STC second zone by a second overlap distance (X), greater than the first overlap distance (X), and at least one of the material plies (22) within the FTC second zone overlaps a respective material ply (22) within the STC second zone by the first overlap distance (X); and
joining the FTC component (20A) and the STC component (20B) by applying an elevated temperature and an elevated pressure to the FTC component (20A) and the STC component (20B) within the joint region (26).

2. The method of claim 1, wherein a continuous material ply arrangement is formed within the joint region (26) of the FTC second zone and the STC second zone by the at least one material ply (22) within the FTC second zone overlapping the respective material ply (22) within the STC second zone by the second overlap distance (X).

3. The method of claim 1 or 2, wherein the FTC component (20A) further includes an FTC third zone that includes P number of material plies (22) and the STC component (20B) further includes an STC third zone that includes P number of material plies (22), wherein P is an integer and does not equal N or M.

4. The method of claim 3, wherein N is greater than P, and P is greater than M.

5. The method of claim 3 or 4, wherein the FTC second zone is disposed between the FTC first zone and the FTC third zone, and the STC second zone is disposed between the STC first zone and the STC third zone, and in the joining step the FTC first zone is joined with the STC first zone, the FTC second zone is joined with the STC second zone, and the FTC third zone is joined with the STC third zone.

6. The method of claim 5, wherein at least one of the material plies (22) within the FTC third zone overlaps a respective material ply (22) within the STC third zone by a third overlap distance (X), and the third overlap distance (X) is greater than the first overlap distance (X).

7. The method of claim 6, wherein at least one of the material plies (22) within the FTC third zone overlaps a respective material ply (22) within the STC third zone by the first overlap distance (X).

8. The method of claim 5, wherein the stepped arrangement includes at least one of the material plies (22) within the FTC third zone overlapping a respective material ply (22) within the STC third zone by a third overlap distance (X), greater than the first overlap distance (X), and at least one of the material plies (22) within the FTC third zone overlaps a respective material ply (22) within the STC third zone by the first overlap distance (X).

9. The method of claim 6, 7 or 8, wherein the second overlap distance (X) is not equal to the third overlap distance (X).

10. The method of claim 6, 7 or 8, wherein the second overlap distance (X) is equal to the third overlap distance (X).

11. The method of any of claims 6 to 10, wherein a continuous material ply arrangement is formed within the joint region (26) of the FTC third zone and the STC third zone by the at least one material ply (22) within the FTC third zone overlapping the respective material ply (22) within the STC third zone by the third overlap distance (X).

12. A method for joining thermoplastic composite components (20A, 20B), comprising
providing a first thermoplastic composite (FTC) component (20A) having an FTC first zone, an FTC second zone, and an FTC third zone, wherein the FTC second zone is disposed between the first FTC zone and the second FTC zone;
providing a second thermoplastic composite (STC) component (20B) having a STC first zone, a STC second zone, and a STC third zone, wherein the STC second zone is disposed between the first STC zone and the second STC zone;
wherein the FTC first zone and the STC first zone include a first number of material plies (22), the FTC second zone and the STC second zone include a second number of material plies (22), and the FTC third zone and the STC third zone include a third number of material plies (22);
wherein the first number of material plies (22) is greater than the second number of material plies (22) and the third number of material plies (22), and the third number of material plies (22) is greater than the second number of material plies (22);
forming a joint region (26) between the FTC component (20A) and the STC component (20B) by disposing the FTC component (20A) and the STC component (20B) in a stepped arrangement, the forming including disposing a first material ply segment within the joint region (26) between the FTC third zone and the STC third zone; and
joining the FTC component (20A) and the STC component (20B) by applying an elevated temperature and an elevated pressure to the FTC component (20A) and the STC component (20B) within the joint region (26).

13. The method of claim 12, wherein a continuous material ply arrangement is formed within the joint region (26) by the first material ply segment (28).

14. The method of claim 12 or 13, wherein the forming further includes disposing a second material ply segment (28) within the joint region (26) between the FTC second zone and the STC second zone.

15. The method of claim 12, 13 or 14, wherein a continuous material ply arrangement is formed within the joint region (26) by the second material ply segment (28).
